**Europäisches Patentamt**

**European Patent Office**

**Office européen des brevets**

(11) Publication number: **0 186 012**
**B1**

(12) # EUROPEAN PATENT SPECIFICATION

(45) Date of publication of patent specification: **30.08.89**

(21) Application number: **85115561.4**

(22) Date of filing: **06.12.85**

(51) Int. Cl.⁴: **G 21 C 3/32**

(54) **A vented upper retainer for facilitating replacement of a top nozzle subassembly on a reconstituted nuclear fuel assembly.**

(30) Priority: **20.12.84 US 683895**

(43) Date of publication of application:
**02.07.86 Bulletin 86/27**

(45) Publication of the grant of the patent:
**30.08.89 Bulletin 89/35**

(84) Designated Contracting States:
**BE DE FR GB IT SE**

(56) References cited:
**EP-A-0 048 343**
**EP-A-0 123 055**
**EP-A-0 138 606**
**FR-A-2 473 773**
**FR-A-2 495 368**

(73) Proprietor: **WESTINGHOUSE ELECTRIC
CORPORATION**
**Westinghouse Building Gateway Center**
**Pittsburgh Pennsylvania 15222 (US)**

(72) Inventor: **Gjertsen, Robert Kenneth**
**126 Penn Lear Drive**
**Monroeville Pennsylvania 15146 (US)**
Inventor: **Shallenberger, John Milton**
**120 West Chapel Ridge Road**
**Pittsburgh Pennsylvnia 15238 (US)**

(74) Representative: **Patentanwälte Dipl.-Ing. R.
Holzer Dipl.-Ing. (FH) W. Gallo**
**Ludwigstrasse 26**
**D-8900 Augsburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to fuel assemblies for nuclear reactors and, more particularly, to means for facilitating replacement of a top nozzle subassembly on the skeleton of the fuel assembly while submerged in water.

In most nuclear reactors, the core portion consists of a large number of elongate fuel elements or rods grouped in and supported by frameworks known as fuel assemblies. The fuel assemblies are elongate and receive support and alignment from upper and lower transversely extending core support plates which are directly or indirectly attached to a support barrel surrounding the entire core and extending longitudinally between the ends thereof. In the most common configuration, the longitudinal axis of the core support barrel extends vertically, as do the various fuel assemblies resting on the lower support plate.

Temperature within the core may vary greatly at various times, such as from cold shutdown to normal operating conditions, and different materials exhibit different thermal growth characteristics. Therefore, since the materials used in the vertically extending support structures of the fuel assemblies are generally different from those used in the core support barrel, the thermal expansion of the various parts thereof in the axial or vertical direction may be quite significant, especially having regard to the high temperatures existing in the core during operation and the axial length of some of the members involved. For these reasons, the fuel assemblies are not usually attached to the upper and lower core plates but are supported in a manner permitting relative motion therebetween. The axial thermal-expansion differential between the fuel assemblies and the core support barrel is accommodated by providing an axial spacing between the upper and lower core support plates which is somewhat larger than the axial length of the fuel assemblies; normally this is done by providing a gap between the top of the fuel assemblies and the upper core support plate.

Furthermore, in most reactors, a liquid coolant, such as water, is directed upward through apertures in the lower core support plate and through the spaces between the fuel rods of the various fuel assemblies in order to extract thermal energy therefrom. The physical configuration of the fuel assemblies is such that the coolant may experience a significant pressure drop in passing upwardly through the core region, and this pressure drop necessarily produces a lifting force upon the fuel assemblies. In some instances, the weight of the fuel assembly is sufficient to overcome the upward hydraulic lift under all operating conditions; however, this is often not the case, particularly when the coolant density is high, as at the reactor start-up, and additionally because of increasing coolant flow rates. When the hydraulic forces in the upward direction on a particular fuel assembly are greater than the weight of that fuel assembly, the net resultant force on the fuel assembly will be in the upward direction, causing the assembly to move upward into contact with the upper core plate. This upward motion of the fuel assembly, if uncontrolled, may result in damage to the fuel assembly and the fuel rods or to the upper core plate and must, therefore be avoided. Therefore, it is customary to employ hold-down devices which prevent the upwardly flowing coolant from lifting the fuel assemblies within the core of a reactor into damaging contact with the upper core support plate while allowing for changes in the fuel-assembly length due to inter alia to thermal expansion.

A fuel assembly having a top nozzle subassembly incorporating hold-down means is disclosed in EP—A—138606, for example. Basically, the top nozzle subassembly described therein includes an upper bearing plate, a lower adapter plate, a plurality of guide-thimble extension tubes extending between the plates and through openings therein, and coil springs encircling the extension tubes and held in a state of compression between the plates by retainers disposed on the extension tubes and serving as stops for the plates. On each extension tube there is a lower retainer in the form of a collar secured to the extension tube below the adapter plate so as to limit downward sliding movement of the latter along the extension tube, and an upper retainer which is attached to an upper end portion of the extension tube within a passageway in the upper bearing plate, and which upper retainer cooperates with a ledge within the passageway to limit upward movement of the bearing plate along the extension tube. The upper retainers likewise are collars or similar hollow or sleeve-like members affixed to the respective guide-thimble extension tubes by means of groove-and-bulge connections comprising grooves formed circumferentially in the inner walls of the retainers, and adjacent peripheral portions of the associated thimble extension tubes bulged radially outward and into interlocking engagement with the internal grooves of the respective retainers. This bulging technique is well known and widely employed in the art.

The kind of top nozzle subassembly briefly described above is particularly suitable for use with reconstitutable fuel assemblies, i.e with fuel assemblies designed to be taken out of service after a number of years for the purpose of inspection, replacement, and/or rearrangement of fuel rods, and then, after such reconstitution, to be returned to service. Reconstitution of a fuel assembly involves removing the latter from the reactor core and transferring it to a work station where the guide-thimble extension tubes are cut just below their groove-and-bulge connections with the upper retainers, and the top nozzle subassembly then is lifted from the fuel assembly to give access to the fuel rods. After the latter have been serviced, as mentioned above, the top nozzle subassembly is remounted on the thimble extension tubes and is reattached to the latter by having a new set of upper retainers and the extension tubes groove-and-bulge connected together. All of these operations are performed while the irradiated fuel assembly to be reconstituted is submersed about 5 to 10 meters deep in water, a condition which has been found to render unexpectedly difficult the formation of groove-and-bulge connections between the thimble extension tubes and the retainers thereon.

It is the principal object of the invention to alleviate this problem, and the invention accordingly resides in a top nozzle subassembly mountable, while submersed in liquid, on tubular guide-thimble extensions of a nuclear fuel assembly, said top nozzle subassembly including an upper bearing plate having formed therethrough a plurality of passageways each adapted to slidably receive one of the tubular guide-thimble extensions, and a plurality of hollow retainers each of which has a groove formed in an inner surface portion thereof and is adapted to be placed around one of the tubular guide-thimble extensions and to be affixed thereto by bulging a portion of the guide thimble extension into said groove, characterized in that each of the hollow retainers has formed therein venting means defining at least one liquid flow path out of said groove and to the exterior of the hollow retainer.

Underlying the invention is the recognition that the cause of the problem which it solves was the entrapment of water in the internal grooves of the retainers occurring when the portions of the guide-thimble extensions being expanded made initial contact with the inner peripheral surfaces of the retainers and thereby virtually sealed the water-containing grooves. Once it was recognized that this entrapment of water and the latter's incompressibility were what made it so difficult to successfully complete bulging operations on nuclear fuel assemblies under reconstitution, there remained the task of devising a practicable way to solve the problem in a manner which would not interfere with completing a sound bulge-and-groove connection in a continuous operation. The invention has attained this objective by providing a solution which is reliable and, in addition, has the advantage of being simple and inexpensive to implement.

Preferred embodiments of the invention will now be described, by way of example only, with reference to the accompanying drawings, in which:—

Fig. 1 is an elevational view, partly in section, of a fuel assembly illustrated in vertically foreshortened form and with parts broken away for clarity, and which fuel assembly includes a top nozzle subassembly with vented upper retainers embodying the invention;

Fig. 2 is an enlarged axial sectional view of one of the vented retainers;

Fig. 3 is a transverse sectional view of the retainer as taken along line 3—3 of Fig. 2;

Fig. 4 is an enlarged top plan view of an alternative form of a vented retainer embodying the invention; and

Fig. 5 is an axial sectional view of the retainer shown in Fig. 4, as taken along line 5—5.

In the following description, like reference characters designate like or corresponding parts throughout the several views of the drawings, and terms such as "forward", "rearward", "left", "right", "upwardly", "downwardly", and the like, are employed as words of convenience not to be construed as limiting terms.

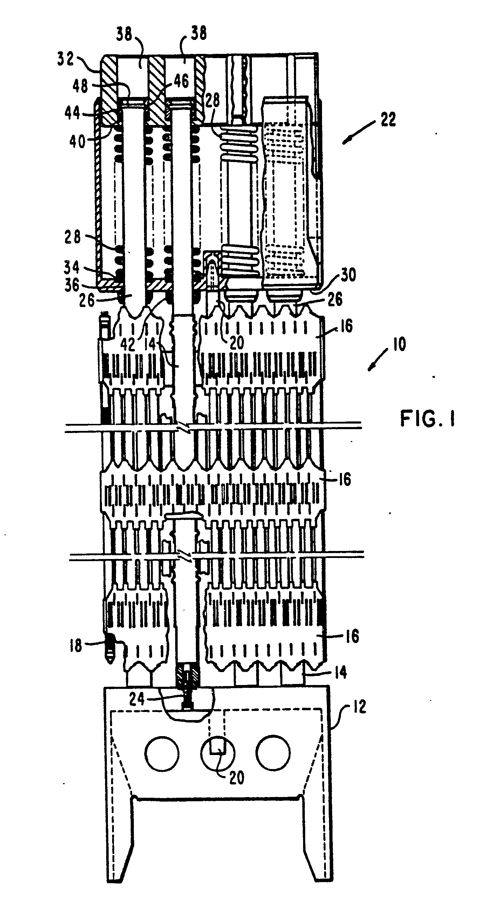

Referring now to the drawings, and particularly to Fig. 1, the fuel assembly illustrated therein and generally designated with numeral 10 is basically of known construction in that it comprises a lower end structure or bottom nozzle 12 adapted to support the assembly on the lower core plate (not shown) in the core region of a nuclear reactor (not shown), a plurality of control rod guide tubes or thimbles 14 which longitudinally extend upward from the bottom nozzle 12, a plurality of transverse grids 16 axially spaced along the guide thimbles 14, an organized array of elongate fuel rods 18 transversely spaced and supported by the grids 16, an instrumentation tube 20 located in the center of the assembly, and an upper end structure or top nozzle 22 attached to the upper ends of the guide thimbles 14. The fuel assembly 10 forms an integral unit capable of being conventionally handled without damage to the assembly parts.

When assembling the fuel assembly 10, the transverse grids 16 are attached to the guide thimbles 14 at predetermined axially spaced locations, then the fuel rods 18 are inserted from below through the grids 16, and next the lower nozzle 12 is suitably attached, such as by machine screws 24, to the lower ends of the guide thimbles 14. The guide thimbles 14 are adapted to receive control rods (not shown) movable to control the fission process, as well known in the art.

In the illustrated embodiment of the fuel assembly 10, each of the control rod guide thimbles 14 has connected to its upper end a guide thimble extension tube 26 which forms a normal extension of the guide thimble in axial alignment therewith, has a diameter similar to that of the guide thimble, and preferably is connected to an upper end portion of the guide thimble by a suitable mechanical connection, such as one or more conventional bulge fittings.

The top nozzle 22 is shown herein as a subassembly including hold-down means. This subassembly design permits the fuel assembly 10 to be placed in the core region with its top in direct contact with the upper core plate (not shown), and provides a hold-down force to prevent hydraulic lifting of the fuel assembly caused by upward coolant flow, while allowing for changes in the fuel assembly length due to core induced thermal expansion and the like. The top nozzle 22 and its hold-down means will now be described in as much detail as needed for a clear understanding of the invention.

Top nozzle with hold-down means

The top nozzle 22 with its hold-down means (referred to hereinafter all together simply as the top nozzle) includes for each extension tube 26 a coil spring 28 disposed thereabout and sandwiched between a lower adapter plate 30 and an upper hold-down or bearing plate 32. The lower ends of the springs 28 rest on seats 34 disposed in counterbore cavities formed in the top surface of the lower adapter plate 30. The lower adapter plate 30 also has formed therethrough holes 36 corresponding in number and location to the guide thimble extension tubes 26 and having the latter slidably extending therethrough. The upper bearing plate 32 has a plurality of passageways 38 therethrough likewise for receiving the extension tubes 26. Each passageway 38 is formed by a lower bore having a generally constant smaller diameter and a coaxial upper counterbore having a generally constant larger diameter, the transition therebetween defining an upwardly facing internal ledge 40.

For each extension tube 26, the top nozzle 22 also includes a lower retainer 42 and an improved upper retainer 44 embodying the invention to be described more fully hereinafter. The lower and upper retainers 42, 44 are annular or sleeve-like members attached to the respective extension tubes 26 and axially spaced apart such as, in cooperation with the lower adapter and upper bearing plates 30, 32, to hold the coil springs 28 in states of compression. More particularly, each lower retainer 42, being formed as a collar, is secured, such as by brazing, to the associated extension tube 26 below the adapter plate 30 so as to limit downward sliding movement of the adapter plate 30. Each upper retainer 44, likewise in the form of a collar or short sleeve, encircles and is affixed to an upper end portion of the associated extension tube 26 and is seated in the counterbore of the associated passageway 38 in the upper bearing plate 32, the upper retainer 44 having an internal annular groove 46 and being affixed to the upper end portion of the extension tube 26 by having an annular portion 48 of the tube 26 circumferentially bulged into the annular groove 46. The upper retainer 44 cooperates with the internal ledge 40 in the passageway 38 to limit upward sliding movement of the upper bearing plate 32 along the extension tubes 26.

Vented upper retainer

The fuel assembly 10 having the top nozzle subassembly 22 as described above is reconstitutable, that is to say, the top nozzle 22 can be removed so as to expose the upper ends of the fuel rods 18 and thereby render the latter accessible for any of a variety of purposes, such as for inspecting them for failure, for removing and replacing failed rods, for transferring partially spent fuel rods from one assembly to another, and/or for rearranging fuel rods in order to attain better uranium utilization in the reactor core. Once inspection, removal, replacement and/or rearrangement of fuel rods 18 is completed, the top nozzle 22 is replaced on the guide thimble extension tubes 26.

Briefly, in order to remove the top nozzle 22, the thimble extension tubes 26 are severed just below their bulge connections to the upper retainers 44. Subsequently, when the top nozzle 22 is to be replaced on the extension tubes 26, a new set of upper retainers 44 is inserted into the passageways 38, and the upper ends of the extension tubes 26 are again bulged into the annular internal grooves 46 of the respective retainers 44 associated therewith. Of course, since a fuel assembly 10 to be reconstituted was irradiated, both the removal and the replacement of its top nozzle take place under water, usually at a work station.

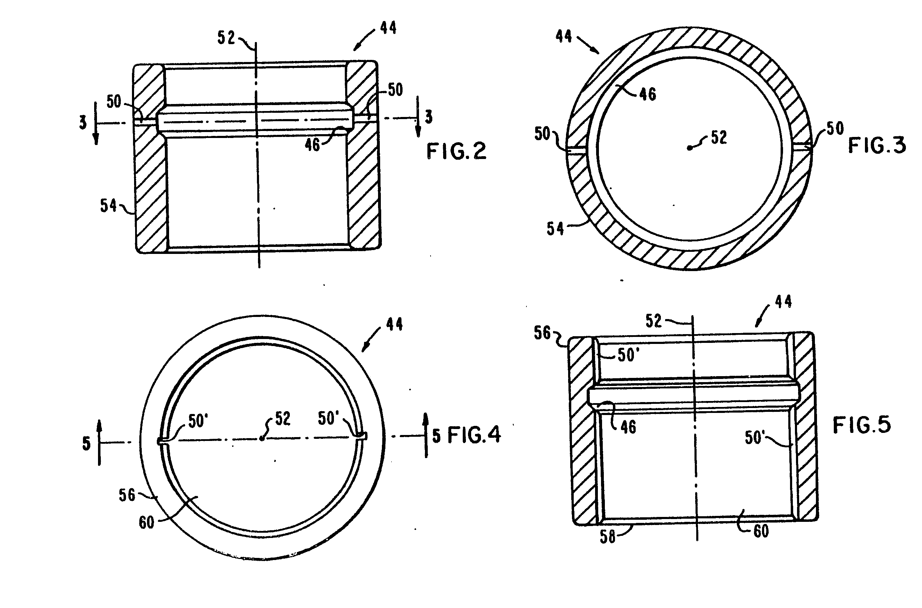

Turning now to Figs. 2 and 3, there is illustrated one of the upper retainers 44 which have been improved, according to the invention, to facilitate bulging of the upper ends of the extension tubes 26 into the internal grooves 46 of their associated retainers 44. As seen from Figs. 2 and 3, the upper retainer 44 shown therein has two small-diameter vents 50 in the form of passages or holes extending radially, with respect to the longitudinal axis 52 of the retainer 44, from the annular groove 46 in the inner surface of the retainer to the peripheral outer surface 54 thereof. The two vents 50, which as shown are diametrically opposed to each other, provide fluid flow communication between the groove 46 and the exterior of the retainer 44. The flow path through each vent 50 will not interefere with an uninterrupted bulging operation carried out to force the adjacent portion of the extension tube 26 into the annular groove 46.

Alternatively, and as shown in Figs. 4 and 5, there could be a vent 50' in the form of a longitudinal groove or slot extending from the groove 46 to either one or both of the upper and lower end surfaces 56, 58 of the retainer 44. In the illustrated embodiment, there are two such vents 50' formed in diametrically opposed inner wall portions of the retainer 44 and extending from the groove 46 to both end surfaces 56, 58 of the retainer. The vents 50' are open toward the hollow interior 60 of the retainer 44 throughout the length thereof.

## Claims

1. A top nozzle subassembly (22) mountable, while submersed in liquid, on tubular guide-thimble extensions (26) of a nuclear fuel assembly (10), said top nozzle subassembly including an upper bearing plate (32) having formed therethrough a plurality of passageways each adapted to slidably receive one of the tubular guide-thimble extensions, and a plurality of hollow retainers (44) each of which has a groove (46) formed in an inner surface portion thereof and is adapted to be placed around one of the tubular guide-thimble extensions and to be affixed thereto by bulging a portion of the guide-thimble extension into said groove, characterized in that each of the hollow retainers (44) has formed therein venting means (50, 50') defining at least one liquid flow path out of said groove (46) and to the exterior of the hollow retainer (44).

2. A top nozzle subassembly according to claim 1, characterized in that the venting means in each retainer (44) comprises at least one hole (50) which extends from said groove (46) radially through a wall portion of the retainer and to the outer peripheral surface (54) thereof.

3. A top nozzle subassembly according to claim 2, characterized in that said venting means comprises at least a pair of holes (50) which extend from said groove (46) radially through diametrically opposed wall portions of the retainer (44).

4. A top nozzle subassembly according to claim 2 or 3, characterized in that said venting means in each retainer (44) comprises at least one slot (50') extending from said groove (46) longitudinally to at least one end face (56 or 58) of the retainer.

5. A top nozzle subassembly according to claim 4, characterized in that said venting means comprises a pair of slots (50') formed in diametrically opposed inner surface portions of the retainer (44) and each extending from said groove (46) longitudinally to at least one of the end faces (56, 58) of the retainer (44).

6. A top nozzle subassembly according to claim 4 or 5, characterized in that said or each slot (50') is open toward the interior (60) of the retainer (44) throughout the longitudinal extent of the slot (50').

**Patentansprüche**

1. Obere Mundstückbaugruppe (22), die im in Flüssigkeit eingetauchten Zustand auf rohrförmigen Führungsrohrfortsätzen (26) eines Kernbrennelements (10) montierbar ist, wobei die obere Mundstückbaugruppe eine obere Halteplatte (32) mit einer Mehrzahl von darin gebildeten Kanälen zur verschiebbaren Aufnahme jeweils eines der rohrförmigen Führungsrohrfortsätze und eine Mehrzahl hohler Halter (44) aufweist, die jeweils mit einer in der Innenwandfläche gebildeten Nut (64) versehen sind und auf einen der rohrförmigen Führungsrohrfortsätze aufsetzbar und darauf durch Einsicken eines Teils der Führungsrohrfortsatzes in die genannte Nut hinein befestigbar ist, dadurch gekennzeichnet, daß jeder der hohlen Halter (44) darin gebildete Einlaßmittel (50, 50') aufweist, die mindestens einen Flüssigkeitsströmungsweg aus der Nut (46) heraus und zum Äußeren des hohlen Halters (44) bilden.

2. Obere Mundstückbaugruppe nach Anspruch 1, dadurch gekennzeichnet, daß die Auslaßmittel in jedem Halter (44) mindestens eine Bohrung (50) aufweisen, die von der Nut (46) radial durch einen Wandteil des Halters und zur äußeren Umfangsfläche (54) verläuft.

3. Obere Mundstückbaugruppe nach Anspruch 2, dadurch gekennzeichnet, daß die Auslaßmittel mindestens zwei Bohrungen (50) aufweisen, die von der Nut (46) radial durch diametral gegenüberliegende Wandteile des Halters (44) verlaufen.

4. Obere Mundstückbaugruppe nach Anspruch 2 oder 3, dadurch gekennzeichnet, daß die Auslaßmittel in jedem Halter (44) mindestens eine Schlitz (50°) aufweisen, der von der Nut (46) in Längsrichtung zu mindestens einer Stirnseite (56 oder 58) des Halters verläuft.

5. Obere Mundstückbaugruppe nach Anspruch 4, dadurch gekennzeichnet, daß die Auslaßmittel zwei Schlitze (50') aufweisen, die an diametral gegenüberliegenden Innenwandflächenbereichen des Halters (44) gebildet sind und jeweils von der Nut (46) in Längsrichtung zu mindestens einer Stirnseite (56, 58) des Halters (44) verlaufen.

6. Obere Mundstückbaugruppe nach Anspruch 4 oder 5, dadurch gekennzeichnet, daß der bzw. jeder Schlitz (50') über seine gesamte Länge zum Inneren (60) des Halters (44) hin offen ist.

**Revendications**

1. Sous-ensemble formant embout supérieur (22) montable, pendant qu'il est immergé dans un liquide, sur des rallongues tubulaires (26) de chaussettes de guidage d'un assemblage combustible nucléaire (10), ledit sous-ensemble formant embout supérieur comprenant une plaque tubulaire supérieure (32), à travers laquelle est ménagée une pluralité de passages conçus chacun pour recevoir de manière coulissante une des rallonges tubulaires de chaussettes de guidage, et une pluralité d'organes de retenue creux (44) dont chacun a une gorge (46) formée dans une partie de sa surface interne et est conçu pour être placé autour d'une des rallonges tubulaires de chaussettes de guidage et pour être fixé à celle-ci en faisant rentrer dans ladite gorge une partie renflée de la rallonge de chaussette de guidage, caractérisé en ce que chacun des organes de reteneu creux (44) comporte en lui-même des moyens d'évacuation (50, 50') définissant au moins un passage permettant à un liquide de sortie de ladite gorge (46) et à l'extérieur de l'organe de retenue creux (44).

2. Sous-ensemble formant embout supérieur selon la revendication 1, caractérisé en ce que les moyens d'évacuation présents dans chaque organe de retenue (44) comportent au moins un trou (50) qui s'étend radialement depuis ladite gorge (46) à travers une partie de la paroi de l'organe de retenue et jusqu'à la surface périphérique extérieure (54) de celui-ci.

3. Sous-ensemble formant embout supérieur selon la revendication 2, caractérisé en ce que lesdits moyens d'évacuation comportent au moins deux trous (50) qui s'étendant radialement depuis ladite gorge (46) à travers des parties diamétralement opposées de la paroi de l'organe de retenue (44).

4. Sous-ensemble formant embout supérieur selon la revendication 2 ou 3, caractérisé en ce que lesdits moyens d'évacuation présents dans chaque organe de retenue (44) comportent au moins une rainure (50') s'étendant longitudinalement depuis ladite gorge (46) jusqu'à au moins une face (56 ou 58) d'extrémité de l'organe de retenue.

5. Sous-ensemble formant embout supérieur selon la revendication 4, caractérisé en ce que lesdits moyens d'évacuation comportent deux rainures (50') formées dans des parties diamétralement opposées de la surface interne de l'organe de retenue (44) et s'étendant chacune longitudinalement depuis ladite gorge (46) jusqu'à au moins une des faces (56, 58) de l'organe de retenue (44).

6. Sous-ensemble formant embout supérieur selon la revendication 4 ou 5, caractérisé en ce que ladite ou chaque rainure (50') débouche sur l'intérieur (60) de l'organe de retenue (44) sur toute la longueur de la fente (50').

FIG. I

FIG.3

FIG.5

FIG.2

FIG.4